(19)

**Europäisches Patentamt**
**European Patent Office**
**Office européen des brevets**

(11) **EP 1 614 599 B1**

(12) **EUROPÄISCHE PATENTSCHRIFT**

(45) Veröffentlichungstag und Bekanntmachung des Hinweises auf die Patenterteilung:
**01.12.2010 Patentblatt 2010/48**

(21) Anmeldenummer: **05014345.2**

(22) Anmeldetag: **01.07.2005**

(51) Int Cl.:
**B60T 8/88** *(2006.01)*

(54) **Verfahren und System zum Überprüfen der Drehzahl eines Kraftfahrzeugrades**

Method and system for checking a wheel speed signal of a motor vehicle

Procédé et dispositif pour vérifier la vitesse de roue d'un véhicule automobile

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **06.07.2004 DE 102004032594**

(43) Veröffentlichungstag der Anmeldung:
**11.01.2006 Patentblatt 2006/02**

(73) Patentinhaber: **Schaeffler Technologies GmbH & Co. KG**
**91074 Herzogenaurach (DE)**

(72) Erfinder: **Eich, Jürgen, Dr.**
**77815 Bühl (DE)**

(56) Entgegenhaltungen:
**EP-A- 0 315 205     EP-A- 0 652 144**
**EP-A- 1 059 217**

EP 1 614 599 B1

**Beschreibung**

Die Erfindung betrifft ein Verfahren und ein System zum Überprüfen der Drehzahl eines Kraftfahrzeugrades.

Kraftfahrzeuge werden zunehmend mit automatisierten Kupplungen, automatischen Getrieben, blokkiergeschützten Bremssystemen, Fahrstabilitätssystemen usw. ausgerüstet. Bei all diesen Systemen ist die genaue Kenntnis der Raddrehzahlen von entscheidender Bedeutung für deren zuverlässige Funktion.

In der EP 1 059 217 A2 wird offenbart, dass bei Vorliegen dreier sich drehender Räder und eines sich nicht mehr drehenden Rades ein festgestellter Raddrehzahlfehler wieder aufgehoben werden kann, wenn die Summe der Raddrehzahlen mit der Motordrehzahl unter Berücksichtigung der Radradien, des eingelegten Ganges und der Anzahl der beteiligten Räder hinreichend übereinstimmt.

Aus der WO 00/35697 ist bekannt, von Sensoren erfasste Raddrehzahlsignale mit Hilfe von Algorithmen auf Plausibilität hin zu überprüfen, beispielsweise durch Bereichs- oder Gradientenüberprüfungen. Weiterreichende Informationen werden lediglich im Rahmen von Korrelationsprüfungen vorgenommen, beispielsweise ein Vergleich mit anderen Raddrehzahlen oder ein Vergleich der Raddrehzahlen mit der Motordrehzahl und anderen Drehzahlen des Antriebsstrangs.

Der Erfindung liegt die Aufgabe zugrunde, ein Verfahren und eine Vorrichtung zum Überprüfen einer Drehzahl eines Rades eines Kraftfahrzeugs zu schaffen, mit dem bzw, der die Sicherheit bei der weiteren Verarbeitung von Raddrehzahlen verbessert ist.

Eine erste Lösung dieser Aufgabe wird mit einem Verfahren zum Überprüfen einer Drehzahl eines Kraftfahrzeugrades erzielt, das folgende Schritte enthält:

- messtechnisches Bestimmen der Drehzahl eines Rades,

- Abschätzen der Drehzahl des Rades aus einem Fahrzeugmodell, das aus der Antriebsleistung und ggf. weiterer Fahrzeug- und Umgebungsparametern die Fahrzeuggeschwindigkeit und aus dieser die Drehzahl des einen Rades schätzt, und

- Vergleichen der gemessenen Drehzahl mit der geschätzten Drehzahl und

- Erzeugen eines Zustandssignals bei überschwelliger Abweichung zwischen gemessener und geschätzter Drehzahl,

dadurch gekennzeichnet, dass bei einer unterschwelligen Abweichung zwischen gemessener und geschätzter Drehzahl das Fahrzeugmodell derart korrigiert wird, dass sich die Abweichung zwischen gemessener und geschätzter Drehzahl vermindert.

Mit dem erfindungsgemäßen Verfahren ist es möglich, die Richtigkeit einer messtechnisch bestimmten, beispielsweise mittels zu einem ABS-System gehöriger Drehzahlsensoren gemessenen Raddrehzahl zu beurteilen, indem diese messtechnisch bestimmte Raddrehzahl mit einer geschätzten Raddrehzahl in Beziehung gesetzt wird, die aus einem Simulationsmodell der Fahrzeug-Längsdynamik abgeleitet wird und aus dem eine Raddrehzahl anhand der die augenblickliche Fahrzeuggeschwindigkeit bestimmenden Parameter errechnet wird. Abhängig vom Vergleich der gemessenen und der geschätzten Drehzahl wird ein Zustandssignal erzeugt, das beispielsweise bei weitgehender Übereinstimmung einen einwandfreien Zustand sowohl des Raddrehzahlsensors als auch des Längsdynamikmodells anzeigt, was mit hoher Sicherheit darauf schließen lässt, dass das Drehzahlsignal der tatsächlichen Raddrehzahl entspricht.

Das Zustandssignal kann ein Durchdrehen des Rades anzeigen, wenn die gemessene Drehzahl überschwellig größer als die geschätzte Drehzahl ist.

Das Zustandssignal kann ein Blockieren des Rades anzeigen, wenn die gemessene Drehzahl überschwellig kleiner als die geschätzte Drehzahl ist und eine das Fahrzeug verzögernde Einrichtung betätigt wird.

Das Zustandssignal kann einen Ausfall des Systems zum Ermitteln der gemessenen Drehzahl anzeigen, wenn die gemessene Drehzahl überschwellig kleiner als die geschätzte Drehzahl ist und eine das Fahrzeug verzögernde Einrichtung nicht betätigt wird.

Bei einer unterschwelligen Abweichung zwischen gemessener und geschätzter Drehzahl kann das Fahrzeugmodell derart korrigiert werden, dass sich die Abweichung zwischen gemessener und geschätzter Drehzahl vermindert.

Weiter ist vorteilhaft, wenn eine Abnahme der Abweichung zwischen geschätzter und gemessener Raddrehzahl unter einen Schwellwert bei Raddrehzahl ungleich Null als Ende eines unnormalen Fahrzustandes gewertet wird.

Mit dem erfindungsgemäßen Verfahren werden vorteilhafterweise die Drehzahlen mehrerer Räder gemessen und /oder geschätzt und im Hinblick auf die Abweichungen der gemessenen Drehzahlen von den geschätzten Drehzahlen getrennt ausgewertet.

Bei einer weiteren Durchführungsform des erfindungsgemäßen Verfahrens wird unter Berücksichtigung eines angenommenen Kurvenradius und einer Spurweite des Fahrzeugs die Drehzahl wenigstens eines linksseitigen und eines rechtsseitigen Fahrzeugrades geschätzt, wird die Drehzahl des wenigstens einen linksseitigen und rechtsseitigen Fahrzeugrades gemessen und wird aus der Abweichung zwischen den geschätzten und gemessenen Drehzahlen bei unterschwelliger Abweichung der angenommene Kurvenradius oder sein Kehrwert korrigiert.

Bei einer weiteren Durchführungsform des erfindungsgemäßen Verfahrens wird zumindest bei nicht betätigter Bremse aus der vom Motor auf das Fahrzeug aufgebrachten Vortriebsleistung und den gemessenen Drehzahlen der Räder deren Traktionskraft geschätzt.

Vorteilhaft ist weiter, wenn zumindest bei nicht betätigter Bremse aus der vom Motor auf das Fahrzeug aufgebrachten Vortriebsleistung und angenommen Traktionskräften an den einzelnen Rädern die Fahrzeuggeschwindigkeit und daraus die Raddrehzahlen geschätzt werden, die Raddrehzahlen gemessen werden und bei einer Abweichung zwischen den gemessenen und den gerechneten Raddrehzahlen die Traktionskräfte korrigiert werden.

Um die beiden vorgenannten Verfahren auch bei betätigter Bremse anwenden zu können, wird bei betätigter Bremse die auf das Fahrzeug wirkende Bremsleistung von der vom Motor aufgebrachten Vortriebsleistung abgezogen.

Weiter kann die Fahrzeugbeschleunigung durch einen Beschleunigungssensor gemessen werden und die gemessene Fahrzeugbeschleunigung bei Ermittlung der geschätzten Drehzahlen und/oder dem Erzeugen eines Zustandssignals berücksichtigt werden.

Ein System zum Überprüfen der Drehzahl eines Kraftfahrzeugrades enthält:

Eine Einrichtung zum messtechnischen Bestimmen einer Raddrehzahl,

eine Einrichtung zum Erfassen des von einem Antriebsmotor abgegebenen Drehmoments, der Drehzahl des Antriebsmotors, des von einer Kupplung übertragbaren Moments und der Übersetzung eines Getriebes,

eine Recheneinrichtung, in der auf Basis eines Fahrzeugmodells und des von dem Antriebsmotor abgegebenen Drehmoments, der Drehzahl des Antriebsmotors, des von der Kupplung übertragbaren Moments und der Übersetzung des Getriebes eine geschätzte Raddrehzahl bestimmt wird,

eine Vergleichseinrichtung zum Vergleichen der gemessenen und der geschätzten Raddrehzahl,

eine Bewertungseinrichtung zum Bewerten der Abweichung und Erzeugen eines Zustandssignals und

eine Korrektureinrichtung zum Erzeugen eines von der Abweichung und dem Zustandssignal abhängigen Korrekturwertes, welcher Korrekturwert der Recheneinrichtung zur Erzeugung einer Korrektur des Fahrzeugmodells zugeführt wird.

Die Erfindung wird im Folgenden anhand schematischer Zeichnungen beispielsweise und mit weiteren Einzelheiten erläutert.

In den Zeichnungen stellen dar:

Fig. 1     ein Blockschaltbild eines erfindungsgemäßen Systems und

Fig. 2     ein Blockschaltbild einer abgeänderten Ausführungsform.

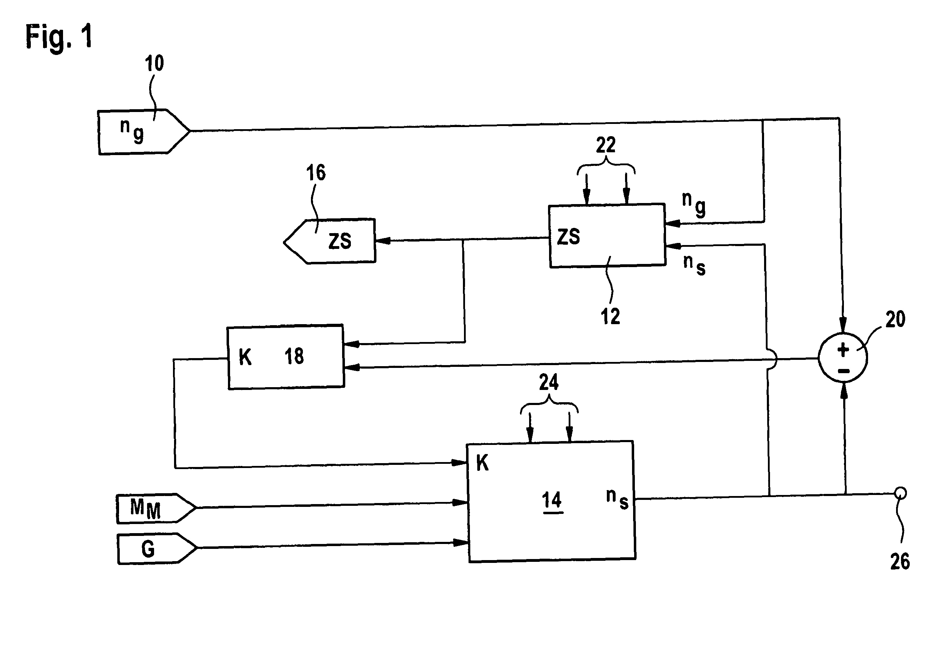

Gemäß Figur 1 ist ein Raddrehzahlsensor 10 mit einem Eingang einer Bewertungseinrichtung 12 verbunden, der das Ausgangssignal des Raddrehzahlsensors 10 als gemessene Raddrehzahl ng zugeführt wird. Ein weiterer Eingang der Bewertungseinrichtung 12 ist mit einem Ausgang einer Recheneinheit 14 verbunden, die an ihrem Ausgang ein einer geschätzten Drehzahl ns entsprechendes Signal liefert.

Ein Ausgang der Bewertungseinrichtung 12 ist mit einer Zustandssignalanzeigeeinheit 16 verbunden und zusätzlich mit einer Korrektureinrichtung 18 verbunden.

Ein weiterer Eingang der Korrektureinrichtung 18 ist mit einer Vergleichseinrichtung 20 verbunden, deren Eingänge das Ausgangssignal des Raddrehzahlsensors 10 und das Ausgangssignal der Recheneinheit 14 zugeführt wird. An einem Ausgang 26 des Systems liegt ebenfalls die geschätzte Raddrehzahl ns.

Der Raddrehzahlsensor 10 ist in seinem Aufbau an sich bekannt und wird daher nicht erläutert. Der Raddrehzahlsensor 10 kann auch durch eine Einrichtung ersetzt werden, die eine Raddrehzahl indirekt mißt, beispielsweise indem die Drehung einer Antriebswelle gemessen wird, deren Übersetzungsverhältnis zum Rad bekannt ist.

Die Bewertungseinrichtung 12 ist eine Einrichtung mit einem Differenzbildungsglied, das die Differenz zwischen der gemessenen Drehzahl ng und der geschätzten Drehzahl ns bildet. Weiter enthält die Bewertungseinrichtung 12 einen Rechenteil, der die Differenz aus ng und ns mit Schwellwerten vergleicht, wobei die Schwellwerte je nachdem, ob ng größer als ns ist oder kleiner unterschiedlich sein können.

Dem Rechenglied nachgeschaltet ist ein Logikglied, das bei Vorliegen vorbestimmter Bedingungen ein oder unterschiedliche Zustandssignale erzeugt, die am Ausgang der Bewertungseinrichtung 12 erzeugt werden.

Weitere Eingänge 22 der Bewertungseinrichtung 12 können mit Fahrzeugsensoren oder Steuergeräten verbunden sein, um die Betätigung einer Bremse, Längs- oder Querbeschleunigung des Fahrzeugs usw. zu berücksichtigen.

An Eingängen der Recheneinheit 14 liegen ein Signal, das das augenblicklich von einem nicht dargestellten Antriebsmotor des Fahrzeugs erzeugte Drehmoment MM angibt und ein Signal G, das eine jeweils in einem Getriebe wirksame Übersetzung angibt. Weitere Eingänge 24 der Recheneinheit 14 führen Signale mit beispielsweise der Drehzahl der Brennkraftmaschine, einer Drehzahldifferenz zwischen Eingangswelle und Ausgangswelle einer Kupplung, eine direkt gemessene Fahrzeugbeschleunigung usw.

In der Korrektureinrichtung 18 wird abhängig vom Zustandssignal ZS und einem Vergleich zwischen ng und ns in der Vergleichseinrichtung 20 ein Korrektursignal K erzeugt, das der Recheneinheit 14 zugeführt wird.

In der Vergleichseinrichtung 20 kann beispielsweise die Differenz aus ng und ns gebildet werden. Es kann auch das Verhältnis beider Größen gebildet werden oder es können die Größen sonstwie in Beziehung zueinander gesetzt werden.

In der Recheneinheit 14 ist ein Fahrzeugmodell, insbesondere ein Modell der Fahrzeug-Längsdynamik abgelegt, in dem aus in Längsrichtung auf das Fahrzeug wirkenden Kräften und fahrzeugspezifischen Parametern, wie der Fahrzeugmasse, Trägheitsmomenten, Reibungskräften und ggf. weiteren, den Eingängen 24 zugehörten Einflussparametern, wie beispielsweise Gegenwind, die Raddrehzahl ns berechnet bzw. geschätzt und prädiktiert werden kann.

Der Aufbau der einzelnen geschilderten Komponenten, in denen einfache, an sich bekannte Rechenoperationen ausgeführt werden, ist an sich bekannt und wird daher nicht erläutert.

Im Folgenden wird die Funktion des Gesamtsystems beispielhaft erläutert.

In der Recheneinheit 14 wird auf Basis des aktuellen Motormoments, der Motordrehzahl, des eingelegten Gangs bzw. der wirksamen Übersetzung, sowie ggf. die Berücksichtigung eines Kupplungsschlupfes usw. die anhand des Modells zu erwartende Raddrehzahl ns abgeschätzt. Diese Größe wird in der Bewertungseinrichtung 12 mit der durch Messung bestimmten Raddrehzahl ns verglichen. Im Fall eines überschwelligen Unterschiedes zwischen beiden Größen kann wie folgt ein Zustandssignal ZS erzeugt werden, das beispielsweise den Wert 1 annimmt, wenn die gemessene Raddrehzahl ng nicht die tatsächliche Fahrgeschwindigkeit widerspiegelt. Als Beispiele seien folgende Möglichkeiten genannt:

- Wenn ng größer ns zuzüglich eines ersten Toleranzbzw. Schwellwertes, kann ein Durchdrehen des Rades vorliegen, so dass ZS auf 1 gesetzt wird.

- Wenn ng kleiner ns abzüglich eines zweiten Schwellwertes, kann entweder auf ein Blockieren des Rades oder auf einen Ausfall des Messsystems zur Ermittlung der Drehzahl ng geschlossen werden. Wird zusätzlich eine Statusinformation, wie "Bremse betätigt" oder "Bremse nicht betätigt" berücksichtigt, die der Bewertungseinrichtung 12 über einen der Eingänge 22 zugeführt werden kann (beispielsweise das Bremslichtsignal), so kann zusätzlich eine Unterscheidung zwischen Blockieren und Signalausfall getroffen werden. Die vier Zustände "s innerhalb der zulässigen Toleranz gleich ng", "Durchdrehen des Rades", "Blockieren des Rades" und "Ausfall des Drehzahlsignals" können in der Zustandssignalanzeigeeinheit 16 signalisiert werden. Die Information kann in einer Fahrzeugsteuereinrichtung zur Steuerung weiterer Systeme verwendet werden.

Insbesondere die beiden Zustände "Raddrehzahl spiegelt nicht die tatsächliche Fahrgeschwindigkeit wieder" oder "Raddrehzahl spiegelt die tatsächliche Fahrgeschwindigkeit wieder" werden der Korrektureinrichtung 18 zusammen mit dem Ergebnis des Vergleichs der beiden Signale aus der Vergleichseinrichtung 20 zugeführt. Wenn das Zustandssignal anzeigt, dass die gemessene Raddrehzahl der geschätzten Raddrehzahl, die normalerweise der tatsächlichen Fahrzeuggeschwindigkeit entspricht, innerhalb der Toleranzen gleich sind, wird in der Korrektureinrichtung 18 ein Korrekturterm berechnet und an die Recheneinheit 14 zur Korrektur des Fahrzeugmodells ausgegeben.

Der Korrekturterm kann unmittelbar die Abweichung zwischen ng und ns sein, die in der Recheneinheit derart berücksichtigt werden kann, dass ns auf den Wert von ng durch entsprechende Änderung von Modellparametern geändert wird. In ansich bekannter Weise kann eine solche Modellkorrektur erfolgen, indem fest vorgegebene Parameter, wie Getriebeübersetzungen, Massen, Radien usw., konstant bleiben und die errechneten bzw. simulierten oder geschätzten Werte, wie z.B. Beschleunigungen, korrigiert werden. Das dieses Vorgehen aus regelungstechnischer Sicht bekannt ist, wird es nicht im Einzelnen erläutert. Die Aussagekraft des Fahrzeugmodells wird durch die Korrekturen verbessert. Des weiteren kann der Schätzfehler bzw. die Abweichung zwischen geschätztem und gemessenem Wert auch über einen oder mehrere Verstärkungsfaktoren in dem Modell berücksichtigt werden.

Außerhalb des Normalbetriebes (Raddrehzahl spiegelt nicht die tatsächliche Fahrgeschwindigkeit wieder) kann die Korrektur gezielt unterbrochen werden, indem der Korrekturterm beispielsweise auf Null gesetzt wird oder dem entsprechenden Eingang der Recheneinheit ein Signal zugeleitet wird, das eine Unterbrechung der Korrektur anzeigt. In diesem Fall wird die geschätzte Raddrehzahl ns rein modellbasiert weiterhin berechnet. Da diese Rechenoperation das aktuelle Antriebsmoment (oder bei Integration in einen Triebstrangbeobachter noch weitere Informationen über den aktuellen Fahrzustand) enthält, ist die geschätzte Raddrehzahl ns im Allgemeinen ein besseres Ersatzsignal für die aktuelle Fahrzeuggeschwindigkeit als eine Extrapolation der gemessenen Raddrehzahl mit gleichbleibendem Gradienten.

An dem Ausgang 26 kann somit ein Raddrehzahlsignal abgegriffen werden, das die tatsächliche Fahrzeuggeschwindigkeit mit hoher Wahrscheinlichkeit sicher wiedergibt und für die Berücksichtigung in weiteren Systemen, wie Fahrstabilitätssystemen, zur Verfügung steht.

Auch das in der Zustandssignalanzeigeeinheit 16 jeweils vorhandene Signal kann für weitere Steuerungs- und/oder Regelungszwecke verwendet werden.

Mit Hilfe der geschätzten Raddrehzahl kann weiter ein Kriterium geschaffen werden, um das Ende eines unnormalen Raddrehzahlzustandes festzustellen. Diese kann prinzipiell anhand der oben genannten Bedingungen erfolgen, wobei andere Toleranzen gewählt werden können, um aufgrund einer Hysterese ein Toggeln des Zustandssignals zu vermeiden. Eine Aufhebung einer Fehler-Indikation bzw. eine Änderung des Zustandssignals sollte allerdings frühestens dann erfolgen, wenn eine von Null verschiedene gemessene Raddrehzahl ng sensiert wurde.

Das dargestellte System kann durch weitere Raddrehzahlsensoren 10 ergänzt werden, mit denen auch die Drehzahlen der anderen Fahrzeugräder erfasst werden.

Werden zwei oder mehrere Drehzahlsignale gleichzeitig messtechnisch erfasst und modellgestützt bewertet, kann nach Erkennen eines Fehlers an einem Rad die Wirkung der Modellkorrektur selektiv für dieses Rad unterdrückt werden. Damit erfolgt die Korrektur anhand der verbleibenden gültigen Signale, woraus sich auch bei Fehlern einzelner Drehzahlsignale bzw. deren Messeinrichtungen eine wirkungsvolle "Ersatzwert-Generierung" für die Fahrzeuggeschwindigkeit ergibt.

Bei Kombination mit einem Triebstrangbeobachter kann die Zustandsinformation über die Raddrehzahlen verwendet werden, um unzulässige Folgerungen bezüglich der Schätzung anderer Größen zu vermeiden. Beispielsweise kann über den Fahrwiderstand oder die Hangabtriebskraft (Bergabfahrt) keine gültige Aussage mehr gemacht werden, wenn gemessene Raddrehzahlsignale ausfallen.

Eine weitere vorteilhafte Nutzung des erfindungsgemäßen Systems besteht in einer Kurvenerkennung:

In das Fahrzeugmodell wird eine Krümmung $\gamma$ = 1/Kurvenradius eingeführt. Eine Geradeausfahrt entspricht $\gamma$ = 0. Somit erhält man:

$$\text{ng links} = \text{ngm} * (1 + \gamma * \text{Spurweite}/2)$$

$$\text{ng rechts} = \text{ngm} * (1 - \gamma * \text{Spurweite}/2)$$

Dabei ist ngm die aus dem Fahrzeugmodell geschätzte mittlere Raddrehzahl. Die linke und die rechte geschätzte Raddrehzahl kann mit der jeweils entsprechenden gemessenen Raddrehzahl verglichen werden. Auf Basis des Vergleiches können gleichzeitig die Werte von $\gamma$ und der mittleren geschätzten Raddrehzahl korrigiert werden.

Zu berücksichtigen ist, dass bei fehlerhaften Signalen im Allgemeinen keine zuverlässige Kurvenerkennung mehr möglich ist. Daher sollte die Korrektur von $\gamma$ eingestellt werden, sobald ein Fehler erkannt wurde. Die Krümmung $\gamma$ wird dann beibehalten, bis ein Ende des Fehlerzustandes erkannt wird. Vorteilhaft kann aber auch sein, die Krümmung im Fehlerfall sofort oder verzögert auf Null zu setzen oder aber langsam in Richtung Null laufen zu lassen. Die letztgenannte Maßnahme bedeutet, dass z.B. bei einem kurzzeitigen Durchdrehen während einer Kurvenfahrt die Information über die Kurve erhalten bleibt, während bei einem länger andauernden Fehler keine womöglich überholten Annahmen aufrecht erhalten werden.

Eine alternative Realisierungsform kann anhand des Motormoments und der gemessenen Raddrehzahl zumindest bei nicht betätigter Bremse die Traktionskraft an einzelnen Rädern schützen. Auch bei Bremsbetätigung ist eine eingeschränkte Schätzung möglich. Aus der Summe der resultierenden Traktionskräfte kann dann die Fahrzeuggeschwindigkeit geschätzt und daraus können die Raddrehzahlen geschätzt werden. Dieser aufwendigere Ansatz bietet mehr Informationen, die physikalische Randbedingungen, wie beispielsweise die maximale mögliche Haftung von Rädern berücksichtigen kann. Die Stärke der Bremsung kann beispielsweise über dem Bremsdruck eingehen, der einem der Eingänge 24 zugeführt wird.

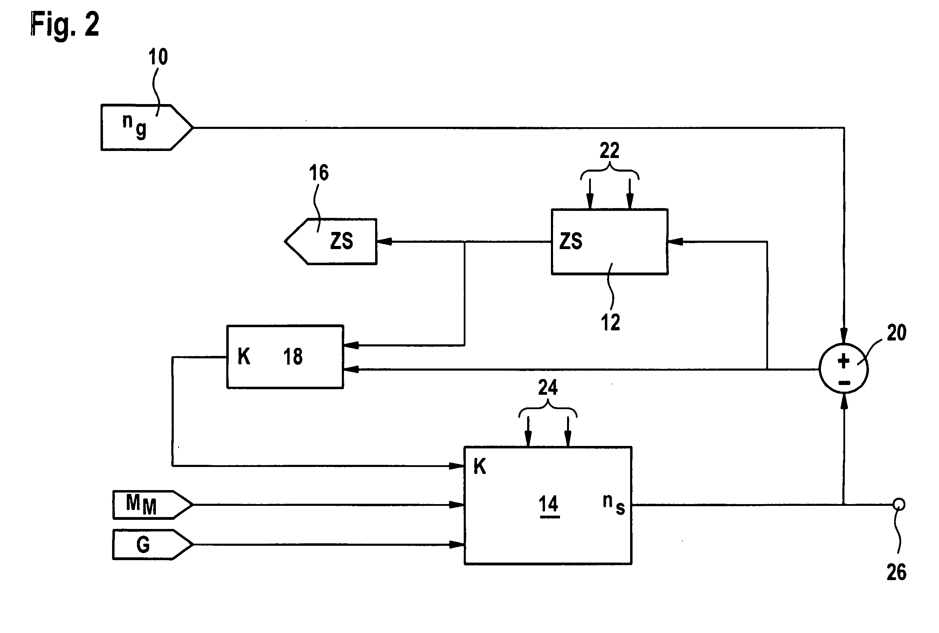

Die Figur 2 zeigt ein gegenüber der Figur 1 abgeändertes Blockschaltbild einer vereinfachten Ausführungsform des erfindungsgemäßen Systems. Bei der Ausführungsform gemäß Figur 2 weist die Bewertungseinrichtung 12 nur einen Eingang auf, der mit dem Ausgang der Vergleichseinrichtung 20 verbunden ist. Diese vereinfachte Ausführungsform kann eingesetzt werden, wenn die gemessene Raddrehzahl und die geschätzte Raddrehzahl in der Bewertungseinrichtung 12 der Figur 1 in die gleiche Beziehung gesetzt werden wie in der Vergleichseinrichtung 20, beispielsweise voneinander subtrahiert werden. Ansonsten entspricht die Funktion der Schaltung gemäß Figur 2 der der Figur 1, wobei die Schaltung gemäß Figur 1 flexibler ist, weil beispielsweise in der Bewertungseinrichtung 12 verwendete Schwellwerte von ns abhängen können.

Das erfindungsgemäße System und die darin ablaufenden Verfahren können in vielfältiger Weise verändert werden. Beispielsweise kann in der Rechnung der geschätzten Raddrehzahl, die wegen der berücksichtigten längsdynamischen Vorgänge ein sicheres Maß für die Fahrzeuggeschwindigkeit ist, jeweils ein dem aktuellen Schätzwert vorausgehender Zeitraum berücksichtigt werden, dessen Länge von der Fahrzeuggeschwindigkeit und dem wirksamen Längskräften abhängen kann. Je nach Aufwand können zusätzliche Sensoren, beispielsweise ein Beschleunigungssensor oder ein Drehmomentsensor verwendet werden und kann das mathematische Modell des Fahrzeugs zusätzlich zur Längsdynamik auch querdynamische Einflüsse berücksichtigen.

**Bezugzeichenliste**

10     Raddrehzahlsensor
12     Bewertungseinrichtung
14     Recheneinheit
16     Zustandssignalanzeigeeinheit
18     Korrektureinrichtung
20     Vergleichseinrichtung
22     Eingänge
24     Eingänge
26     Ausgang

**Patentansprüche**

1. Verfahren zum Auswerten einer Drehzahl eines Kraftfahrzeugrades, enthaltend folgende Schritte:

   - messtechnisches Bestimmen der Drehzahl eines Rades,
   - Abschätzen der Drehzahl des Rades aus einem Fahrzeugmodell, das aus der Antriebsleistung und ggf. weiteren Fahrzeug- und Umgebungsparametern die Fahrzeuggeschwindigkeit und aus dieser die Drehzahl des einen Rades schätzt, und
   - Vergleichen der gemessenen Drehzahl mit der geschätzten Drehzahl und
   - Erzeugen eines Zustandssignals bei überschwelliger Abweichung zwischen gemessener und geschätzter Drehzahl,

   **dadurch gekennzeichnet, dass** bei einer unterschwelligen Abweichung zwischen gemessener und geschätzter Drehzahl das Fahrzeugmodell derart korrigiert wird, dass sich die Abweichung zwischen gemessener und geschätzter Drehzahl vermindert.

2. Verfahren nach Anspruch 1, wobei das Zustandssignal ein Durchdrehen des Rades anzeigt, wenn die gemessene Drehzahl überschwellig größer als die geschätzte Drehzahl ist.

3. Verfahren nach Anspruch 1 oder 2, wobei das Zustandssignal ein Blockieren des Rades anzeigt, wenn die gemessene Drehzahl überschwellig kleiner als die geschätzte Drehzahl ist und eine das Fahrzeug verzögernde Einrichtung betätigt wird.

4. Verfahren nach einem der Ansprüche 1 bis 3, wobei das Zustandssignal einen Ausfall des Systems zum Ermitteln der gemessenen Drehzahl anzeigt, wenn die gemessene Drehzahl überschwellig kleiner als die geschätzte Drehzahl ist und eine das Fahrzeug verzögernde Einrichtung nicht betätigt ist.

5. Verfahren nach einem der Ansprüche 1 bis 4, wobei bei Raddrehzahl ungleich Null eine Abnahme der Abweichung zwischen geschätzter und gemessener Raddrehzahl unter einem Schwellwert als Ende eines unnormalen Fahrzustandes gewertet wird.

6. Verfahren nach einem der Ansprüche 1 bis 5, wobei die Drehzahlen mehrerer Räder gemessen und/oder geschätzt werden und im Hinblick auf die Abweichungen der gemessenen Drehzahlen von den geschätzten Drehzahlen getrennt ausgewertet werden.

7. Verfahren nach einem der Ansprüche 1 bis 6, wobei unter Berücksichtigung eines angenommenen Kurvenradius und einer Spurweite des Fahrzeugs die Drehzahl wenigstens eines linksseitigen und eines rechtsseitigen Fahrzeugrades geschätzt wird, die Drehzahl des wenigstens einen linksseitigen und rechtsseitigen Fahrzeugrades gemessen wird und aus der Abweichung zwischen den geschätzten und gemessenen Drehzahlen bei unterschwelliger Abweichung der Kurvenradius oder sein Schwellwert korrigiert wird.

8. Verfahren nach einem der Ansprüche 1 bis 7, wobei zumindest bei nicht betätigter Bremse aus der vom Motor auf das Fahrzeug aufgebrachten Vortriebsleistung und den gemessenen Drehzahlen der Räder deren Traktionskraft geschätzt wird.

9. Verfahren nach einem der Ansprüche 1 bis 7, wobei zumindest bei nicht betätigter Bremse aus der vom Motor auf das Fahrzeug aufgebrachten Vortriebsleistung und angenommenen Traktionskräften an den einzelnen Rädern die Fahrzeuggeschwindigkeit und daraus die Raddrehzahlen geschätzt werden, die Raddrehzahlen gemessen werden und bei einer Abweichung zwischen den gemessenen und den gerechneten Raddrehzahlen die Traktionskräfte korrigiert werden.

10. Verfahren nach Anspruch 8 oder 9, wobei bei betätigter Bremse die auf das Fahrzeug wirkende Bremsleistung von der vom Motor aufgebrachten Vortriebsleistung abgezogen wird.

11. Verfahren nach einem der Ansprüche 1 bis 10, wobei die Fahrzeugbeschleunigung durch einen Beschleunigungssensor gemessen wird und die gemessene Fahrzeugbeschleunigung bei der Ermittlung der geschätzten Drehzahlen und/oder dem Erzeugen eines Zustandssignals berücksichtigt wird.

12. System zum Auswerten der Drehzahl eines Kraftfahrzeugrades, enthaltend eine Einrichtung (10) zum messtechnischen Bestimmen einer Raddrehzahl,

eine Einrichtung zum Erfassen des von einem Antriebsmotor abgegebenen Drehmoments, der Drehzahl des Antriebsmotors, des von einer Kupplung übertragbaren Moments und der Übersetzung eines Getriebes,

eine Recheneinrichtung (14), in der auf Basis eines Fahrzeugmodells und des von dem Antriebsmotor abgegebenen Drehmoments, der Drehzahl des Antriebsmotors, des von der Kupplung übertragbaren Moments und der Übersetzung des Getriebes eine geschätzte Raddrehzahl bestimmt wird,

eine Vergleichseinrichtung (20) zum Vergleichen der gemessenen und der geschätzten Raddrehzahl,

eine Bewertungseinrichtung (12) zum Bewerten der Abweichung und Erzeugen eines Zustandssignals und

eine Korrektureinrichtung (18) zum Erzeugen eines von der und dem Zustandssignal abhängigen Korrekturwertes, welcher Korrekturwert der Recheneinrichtung zur Erzeugung einer Korrektur des Fahrzeugmodells zugeführt wird.

## Claims

1. Method for evaluating a rotational speed of a motor vehicle wheel, containing the following steps:

    - determination of the rotational speed of a wheel by means of measuring equipment,
    - estimation of the rotational speed of the wheel from a vehicle model which estimates the speed of the vehicle on the basis of the driving power, if appropriate, further vehicle parameters and ambient parameters, and estimates the rotational speed of one of the wheels on the basis thereof, and
    - comparison of the measured rotational speed with the estimated rotational speed, and
    - generation of a status signal when the deviation between the measured rotational speed and estimated rotational speed is above a threshold,

    **characterized in that** when the deviation between the measured rotational speed and the estimated rotational speed is below a threshold, the vehicle model is corrected in such a way that the deviation between the measured rotational speed and the estimated rotational speed is reduced.

2. Method according to Claim 1, wherein the status signal indicates spinning of the wheel when the measured rotational speed is greater than the estimated rotational speed by an amount that is above a threshold.

3. Method according to Claim 1 or 2, wherein the status signal indicates locking of the wheel if the measured rotational speed is lower than the estimated rotational speed by an amount which is above a threshold, and a device which decelerates the vehicle is activated.

4. Method according to one of Claims 1 to 3, wherein the status signal indicates a failure of the system for the determination of the measured rotational speed when the measured rotational speed is lower than the estimated rotational speed by an amount which is above a threshold, and a device which decelerates the vehicle is not activated.

5. Method according to one of Claims 1 to 4, wherein when the wheel speed is unequal to zero a reduction in the deviation between the estimated wheel speed and the measured wheel speed below a threshold value is evaluated as an end of an abnormal driving state.

6. Method according to one of Claims 1 to 5, wherein the rotational speeds of a plurality of wheels are measured and/or estimated, and are evaluated separately in respect of the deviations between the measured rotational speeds and the estimated rotational speeds.

7. Method according to one of Claims 1 to 6, wherein the rotational speed of at least one left-hand vehicle wheel and of at least one right-hand vehicle wheel is estimated taking into account an assumed bend radius and a track width of the vehicle, the rotational speed of the at least one left-hand vehicle wheel and right-hand vehicle wheel is measured, and the bend radius or its threshold value is corrected on the basis of the deviation between the estimated rotational speeds and measured rotational speeds given deviation by an amount which is below a threshold.

8. Method according to one of Claims 1 to 7, wherein, at least when the brake is not activated, the traction force of the wheels is estimated from the propulsion power applied to the vehicle by the engine and the measured rotational speeds of the wheels.

9. Method according to one of Claims 1 to 7, wherein, at least when the brake is not activated, the speed of the vehicle is estimated on the basis of the propulsion power applied to the vehicle by the engine and the assumed traction forces at the individual wheels, and the wheel speeds are estimated on the basis of said speed of the vehicle, the wheel speeds are measured, and the traction forces are corrected if there is a deviation between the measured wheel speeds and the calculated wheel speeds.

10. Method according to Claim 8 or 9, wherein, when the brake is activated, the braking power which acts on the vehicle is subtracted from the propulsion power which is applied by the engine.

11. Method according to one of Claims 1 to 10, wherein the acceleration of the vehicle is measured by means of an acceleration sensor, and the measured acceleration of the vehicle is taken into account in the determination of the estimated rotational speeds and/or the generation of a status signal.

12. System for evaluating the rotational speed of a vehicle wheel, containing a device (10) for determining a wheel speed by means of measuring equipment, a device for sensing the torque which is output by a drive engine, the rotational speed of the drive engine, the torque which can be transmitted by a clutch and the transmission ratio of a gearbox, a computing device (14) in which an estimated wheel speed is determined on the basis of a vehicle model and the torque which is output by the drive engine, the rotational speed of the drive engine of the torque which can be transmitted by the clutch, and the transmission ratio of the gearbox, a comparison device (20) for comparing the measured wheel speed and the estimated wheel speed, an evaluation device (12) for evaluating the deviation and generating a status signal, and a correction device (18) for generating a correction value which is dependent on the status signal and which is fed to the computing device in order to generate a correction of the vehicle model.

**Revendications**

1. Procédé pour interpréter une vitesse de rotation d'une roue de véhicule automobile, comprenant les étapes suivantes :

   - détermination métrologique de la vitesse de rotation d'une roue,
   - estimation de la vitesse de rotation de la roue sur un modèle de véhicule qui estime la vitesse du véhicule à partir de la puissance d'entraînement et éventuellement d'autres paramètres du véhicule et de l'environnement et, à partir de celle-ci, la vitesse de rotation de la roue,
   - comparaison de la vitesse de rotation mesurée avec la vitesse de rotation estimée et
   - génération d'un signal d'état en cas d'écart supérieur à un seuil entre les vitesses de rotation mesurée et estimée,

   **caractérisé en ce que** dans le cas d'un écart inférieur à un seuil entre les vitesses de rotation mesurée et estimée, le modèle de véhicule est corrigé de telle sorte que l'écart entre les vitesses de rotation mesurée et estimée se réduit.

2. Procédé selon la revendication 1, le signal d'état indiquant un patinage de la roue lorsque la vitesse de rotation mesurée est supérieure d'un seuil donné à la vitesse de rotation estimée.

3. Procédé selon la revendication 1 ou 2, le signal d'état indiquant un blocage de la roue lorsque la vitesse de rotation mesurée est inférieure d'un seuil donné à la vitesse de rotation estimée et lorsqu'un dispositif de ralentissement du véhicule est actionné.

4. Procédé selon l'une des revendications 1 à 3, le signal d'état indiquant une panne du système de détermination de la vitesse de rotation lorsque la vitesse de rotation mesurée est inférieure d'un seuil donné à la vitesse de rotation estimée et lorsqu'un dispositif de ralentissement du véhicule n'est pas actionné.

5. Procédé selon l'une des revendications 1 à 4, une diminution de l'écart entre les vitesses de rotation de roue estimée et mesurée au-dessous d'une valeur de seuil dans le cas d'une vitesse de rotation de roue différente de zéro étant interprétée comme la fin d'un état de conduite anormal.

6. Procédé selon l'une des revendications 1 à 5, les vitesses de rotation de plusieurs roues étant mesurées et/ou estimées et interprétées séparément pour vérifier les écarts entre les vitesses de rotation mesurées et les vitesses de rotation estimées.

7. Procédé selon l'une des revendications 1 à 6, la vitesse de rotation d'au moins une roue de véhicule du côté gauche et une roue du côté droit étant estimée en tenant compte d'un rayon de virage à venir et d'un écartement des roues du véhicule, la vitesse de rotation de l'au moins une roue de véhicule du côté gauche et une roue du côté droit étant mesurée et le rayon de virage ou sa valeur de seuil étant corrigé à partir de l'écart entre les vitesses de rotation estimées et mesurées en cas d'écart inférieur à un seuil.

8. Procédé selon l'une des revendications 1 à 7, la force de traction des roues étant estimée, au moins lorsque le frein n'est pas actionné, à partir de la puissance propulsive appliquée par le moteur au véhicule et des vitesses de rotation mesurées des roues.

9. Procédé selon l'une des revendications 1 à 7, la vitesse du véhicule et, à partir de celle-ci, les vitesses de rotation des roues étant estimées, au moins lorsque le frein n'est pas actionné, à partir de la puissance propulsive appliquée par le moteur au véhicule et des forces de traction supposées au niveau des roues individuelles, les vitesses de rotation des roues étant mesurées et les forces de traction étant corrigées en présence d'un écart entre les vitesses de rotation de roue mesurées et calculées.

**10.** Procédé selon la revendication 8 ou 9, la puissance de freinage agissant sur le véhicule, lorsque le frein est actionné, étant soustraite de la puissance propulsive appliquée par le moteur.

**11.** Procédé selon l'une des revendications 1 à 10, l'accélération du véhicule étant mesurée par un capteur d'accélération et l'accélération mesurée du véhicule étant prise en compte lors de la détermination des vitesses de rotation estimées et/ou lors de la génération d'un signal d'état.

**12.** Système pour interpréter la vitesse de rotation d'une roue de véhicule automobile, comprenant un dispositif (10) de détermination métrologique de la vitesse de rotation d'une roue,
un dispositif de détection du couple délivré par un moteur d'entraînement, du moment pouvant être transmis par un accouplement et du rapport de démultiplication d'une boîte de vitesses,
une unité de calcul (14) dans laquelle est déterminée une vitesse de rotation de roue estimée en se basant sur un modèle de véhicule et sur le couple délivré par le moteur d'entraînement, la vitesse de rotation du moteur d'entraînement, le moment pouvant être transmis par l'accouplement et le rapport de démultiplication de la boîte de vitesses,
un dispositif de comparaison (20) pour comparer les vitesses de rotation mesurée et estimée,
un dispositif d'évaluation (12) pour évaluer l'écart et générer un signal d'état, et
un dispositif de correction (18) pour générer une valeur de correction du signal d'état et dépendante de celui-ci, laquelle valeur de correction étant acheminée au dispositif de calcul pour générer une correction du modèle de véhicule.

EP 1 614 599 B1

**Fig. 1**

**Fig. 2**

EP 1 614 599 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1059217 A2

- WO 0035697 A